# EUROPEAN PATENT APPLICATION

(11) **EP 4 318 758 A1**
(43) Date of publication of application: **07.02.2024**
(21) Application number: 22780351.7
(22) Date of filing: 23.03.2022
(51) Int. Cl.: H01M 50/213, H01G 11/10, H01M 50/233, H01M 50/242

(54) **POWER STORAGE MODULE**

(30) Priority: 31.03.2021 JP 2021059743
(71) Applicant: Panasonic Intellectual Property Management Co., Ltd., Kadoma-shi, Osaka 571-0057 (JP)
(72) Inventor: TAKASAKI, Hiroshi, Kadoma-shi, Osaka 571-0057 (JP); KUME, Shingo, Kadoma-shi, Osaka 571-0057 (JP); HIRANUMA, Momoko, Kadoma-shi, Osaka 571-0057 (JP)
(74) Representative: Novagraaf International SA
(86) International application number: PCT/JP2022/013356
(87) International publication number: WO 2022/210136

(57) **Abstract**

A power storage module includes at least one cylindrical power storage device, and a cell holder that houses the power storage device. The cell holder includes a retainer that holds a lower side in an axial direction of the power storage device, and a side wall that covers a side peripheral surface of the power storage device. The retainer includes a container which houses a lower end side of the power storage device, and a notch that is formed on a side surface of the retainer along an inner surface of the container.

## Description

### TECHNICAL FIELD

The present disclosure relates to a power storage module.

### BACKGROUND ART

A power storage module is known as a power source including a plurality of power storage devices housed in a container thereof (for example, PTL 1).

### Citation List

### Patent Literature

PTL 1: Unexamined Japanese Patent Publication No. 2011-065906

### SUMMARY OF THE INVENTION

### Technical problem

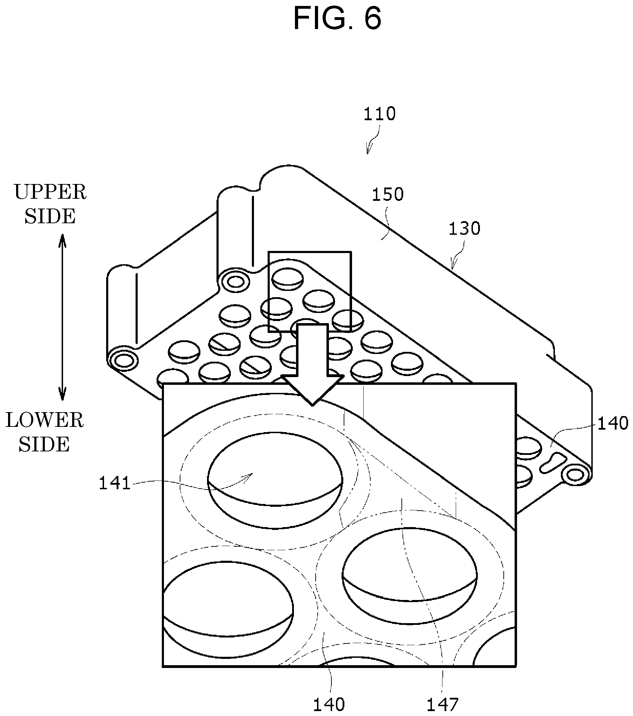

When an impact is applied to the power storage module from the outside, a large load acts on the power storage device, the power storage device is greatly deformed, and the safety of the power storage module may be impaired. Cell holder 130 on which conventional power storage module 110 is mounted will be described with reference to Fig. 6. Fig. 6 is a perspective view and a partially enlarged view showing cell holder 130 of power storage module 110.

Power storage module 110 includes a plurality of cylindrical power storage devices (not illustrated) and cell holder 130 which houses the plurality of power storage devices. Cell holder 130 includes retainer 140 which holds a lower side of the power storage device in the axial direction and side wall 150 which covers a side surface of the power storage device in the axial direction. Retainer 140 has container 141 which houses a lower end side of the power storage device.

When the impact is applied to power storage module 110 and cell holder 130 is crushed, triangular piece 147 separated from retainer 140 is formed at the outer edge of retainer 140 due to the breakage of retainer 140. When triangular piece 147 is stuck in the side peripheral surface of the power storage device, the power storage device may be damaged, and the power storage device may be short-circuited to cause thermal runaway. As a result, the safety of power storage module 10 can be lowered when cell holder 30 is crushed by the impact applied to power storage module 110.

An object of the present disclosure is to provide a power storage module capable of improving safety.

### Solution to problem

A power storage module according to one aspect of the present disclosure includes: at least one cylindrical power storage device; and a cell holder that houses the power storage device. The cell holder includes a retainer that holds one side in an axial direction of the power storage device, and a side wall that covers a side surface of the power storage device. The retainer includes at least one container which houses one end side or another end side of the power storage device, and a first notch that is formed on a side surface of the retainer along an inner surface of the container.

### Advantageous effect of invention

According to one aspect of the present disclosure, safety of the power storage module can be improved.

### BRIEF DESCRIPTION OF THE DRAWINGS

Fig. 1 is a perspective view illustrating a power storage module according to an exemplary embodiment.
Fig. 2 is a perspective view and a partially enlarged view illustrating a cell holder according to an example of the exemplary embodiment.
Fig. 3 is a plan view and a partially enlarged view illustrating a retainer according to an example of the exemplary embodiment.
Fig. 4 is an AA cross-sectional view of Fig. 3.
Fig. 5 is a plan view and a partially enlarged view illustrating a cell holder according to another example of the exemplary embodiment.
Fig. 6 is a perspective view and a partially enlarged view showing a cell holder of a conventional power storage module.

### DESCRIPTION OF EMBODIMENT

Hereinafter, exemplary embodiments of the present disclosure will be described with reference to the drawings. Shapes, materials, and numbers to be described below are examples, and can be appropriately changed according to specifications of a power storage module.

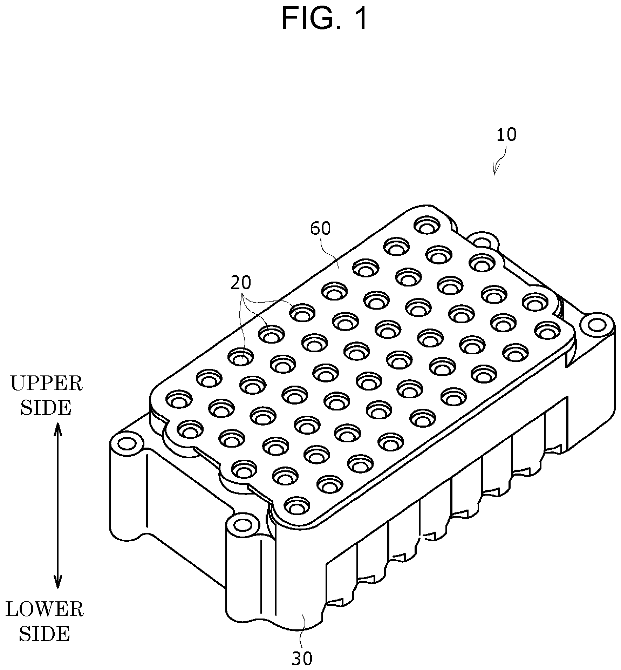

Power storage module 10 of an exemplary embodiment will be described with reference to Fig. 1. Fig. 1 is a perspective view showing power storage module 10. Hereinafter, a side on which lid 60 for closing cell holder 30 is provided in the axis of power storage device 20 will be described as an upper side.

Power storage module 10 is mainly used as a power source for power. Power storage module 10 is used as a power source of an electric device driven by a motor such as an electric car, an electric power tool, an electric power-assisted bicycle, an electric motorcycle, an electric wheelchair, an electric tricycle, or an electric cart. However, the application of power storage module 10 is not limited, and power storage module 10 may be used as a power source of various electric devices used indoors and outdoors, such as a cleaner, a wireless device, a lighting device, a digital camera, and a video camera.

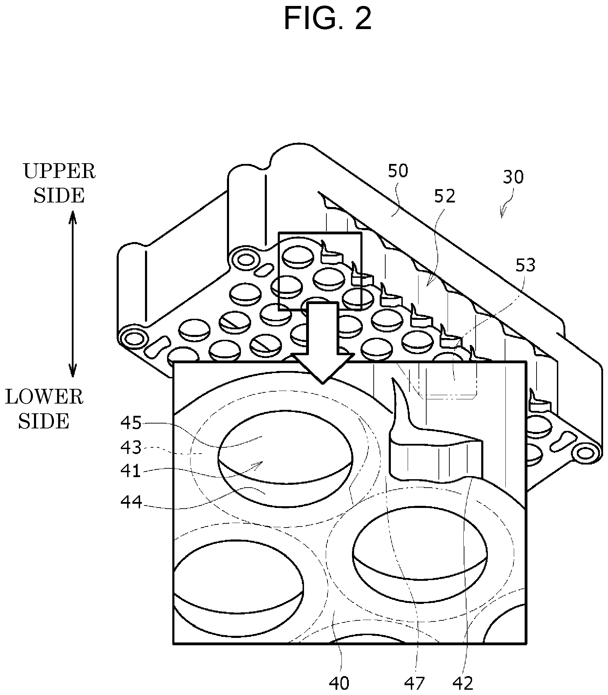

In Fig. 1, power storage module 10 includes a plurality of cylindrical power storage devices 20, cell holder 30 which houses the plurality of power storage devices 20, and lid 60 which closes an upper surface of cell holder 30. Cell holder 30 will be described later in detail after the description of Fig. 2.

In this example, a cylindrical lithium ion secondary battery is used as power storage device 20, but the power storage device may be a nickel-metal hydride battery, a capacitor or the like. Power storage device 20 includes, for example, an electrode group in which a strip-shaped positive electrode and a strip-shaped negative electrode are wound in with a strip-shaped separator interposed therebetween, a cylindrical outer covering can containing the electrode group together with an electrolyte solution, a sealing body sealing an opening of the outer covering can in an insulated state, a foil-shaped positive electrode lead electrically connecting a positive electrode and the sealing body, and a negative electrode lead electrically connecting a negative electrode and the outer covering can. An insulating gasket may be disposed between an outer periphery of the sealing body and an inner peripheral surface of the opening of the outer covering can.

An annular groove is formed near the opening of the outer peripheral surface of the outer covering can. The groove is formed as an annular protrusion on the inner peripheral surface of the outer covering can. The gasket and the sealing body are disposed on the annular protrusion in the outer covering can. Further, the opening end of the outer covering can is swaged to fall down toward an inside of the outer covering can in a state where the gasket is disposed on an inner peripheral side. The sealing body is sandwiched by the swaged opening end and the convex part in the vertical direction through the gasket and thus the opening of the outer covering can is sealed.

The sealing body may be provided with a current interruption mechanism (CID) or an exhaust valve that ruptures when the inside of the outer covering can reaches a predetermined pressure or more. In addition, an insulating plate for insulating the electrode group from the outer covering can may be provided between the electrode group and the retainer of the outer covering can or between the electrode group and the protrusion (groove). When the insulating plate is provided, the positive electrode lead may extend through a through-hole formed in the insulating plate. The negative electrode lead may pass through the through-hole formed in the insulating plate or may extend while bypassing the insulating plate.

In power storage device 20, the positive electrode terminal is formed on the top surface of the sealing body, and the negative electrode terminal is disposed toward the upper end (swaged opening end) of the outer covering can. The electrode groups may be connected such that the outer covering can functions as a positive electrode terminal and the sealing body functions as a negative electrode terminal.

A plurality of power storage devices 20 are densely filled in power storage module 10 in consideration of safety, and adjacent power storage devices 20 are arranged substantially close to each other. In power storage device 20, for example, in plan view, six power storage devices 20 are arranged so as to surround one power storage device 20 (hereinafter, staggered arrangement). The plurality of power storage devices 20 may be connected in series or in parallel to each other through a current collector (not illustrated) having conductivity. At this time, the position where the lead extending from the current collector is connected to the power storage device may be the top surface of the sealing body as the positive electrode terminal and the opening end of the swaged outer covering can as the negative electrode terminal.

Lid 60 closes the upper surface of cell holder 30 as described above. An exhaust duct communicating with an exhaust valve of power storage device 20 may be provided below lid 60. The exhaust duct may communicate with an exhaust port provided in cell holder 30. Lid 60 has a plurality of holes so that sealing bodies of the plurality of power storage devices 20 are exposed. The part on the upper end of power storage device 20 (the top surface of the sealing plate) and the current collecting member may be electrically connected to each other through the plurality of holes. In addition, lid 60 may be further provided with a plurality of holes for exposing the opening of the outer covering can. The opening of the outer covering can and the current collecting member may be electrically connected via the plurality of holes.

A cell holder 30 as an example of the exemplary embodiment will be described in detail with reference to Fig. 2. Fig. 2 is a perspective view and a partially enlarged view illustrating cell holder 30.

Cell holder 30 includes retainer 40 that holds a lower side of power storage device 20 in the axial direction, and side wall 50 that covers a side peripheral surface extending along the axis of power storage device 20. According to cell holder 30, when an impact is applied from the side surface of power storage module 10, power storage device 20 can be protected from the impact. Cell holder 30 may be configured to include retainer 40 which holds an upper part of power storage device 20 along the axis of power storage device 20 and side wall 50 which covers a side surface of power storage device 20 in the axial direction. At this time, in plan view of cell holder 30, side wall 50 may be disposed away from container 41 such that container 41 closest to side wall 50 and side wall 50 have a predetermined interval in the at least one container 41. With this configuration, a filler such as an insulating resin can be interposed between side wall 50 and container 41. Then, power storage device 20 can be more firmly fixed in cell holder 30. At this time, the power storage device has a surface which connects the lower end of side wall 50 and the opening edge of container 41 closest to side wall 50 and expands in the radial direction of power storage device 20. The filler may be interposed not only in the gap between container 41 and side wall 50 but also in the gap between the adjacent containers 41 and the gap between container 41 and power storage device 20.

retainer 40 is formed on the bottom surface of cell holder 30, and holds the lower side along the axis of power storage device 20 in a state where the power storage devices 20 are arranged. With such a configuration, the power storage devices 20 are housed in cell holder 30 in an arranged state. Retainer 40 includes a plurality of containers 41 which are recesses for housing a part near the lower end side of power storage device 20 therein, and notch 42 as a first notch formed along container 41 on an outer side surface (edge) of retainer 40.

The part near the lower end of power storage device 20 is fitted to each of the plurality of containers 41. With such a configuration, the part near the lower end of power storage device 20 is held by retainer 40 of cell holder 30. Container 41 includes bottom surface 43 facing a lower end surface (bottom surface) of power storage device 20, wall 44 having an annular inner peripheral surface facing a side peripheral surface of the lower end of power storage device 20, and opening 45 formed in bottom surface 43 and exposing the bottom surface of power storage device 20.

As described above, notch 42 is formed along container 41 on the side surface of retainer 40 of cell holder 30. Notch 42 is formed between the adjacent containers 41 at the edge of retainer 40. Notch 42 is formed to be a substantially triangular recess having an arc along the inner peripheral surface of container 41 in plan view.

In other words, notch 42 is formed by cutting out the side surface of retainer 40 such that the thickness of wall 44 on the outer side of container 41 closest to the edge of retainer 40 among the at least one container 41 becomes a predetermined thickness. The predetermined thickness is preferably a minimum thickness among thicknesses capable of securing rigidity of cell holder 30, but is not limited to this minimum thickness. Notch 42 may also be formed in container 41 closest to the corner of retainer 40. Further, on the lower end surface (axial end surface) of retainer 40, a concave part may be formed in a region surrounded by the plurality of containers 41. Of the inner surfaces of the concave part, a surface facing wall 44 of container 41 surrounding the concave part may be formed along the inner surface of wall 44. The concave part having the inner surface can obtain the same effect as that of notch 42.

Notch 42 may be formed in a substantially triangular shape having a linear part along container 41 in plan view. In addition, a wall may be formed along the outer peripheral surface of retainer 40 in notch 42.

According to notch 42, when an impact is applied to power storage module 10 and cell holder 30 is crushed, triangular piece 47 formed in the vicinity of the side peripheral surface of retainer 40 (the edge of retainer 40) due to the damage of retainer 40 can be thinned.

By thinning triangular piece 47, the rigidity of triangular piece 47 is weakened (weakened), and even when triangular piece 47 abuts on the side peripheral surface of power storage device 20, it is possible to suppress power storage device 20 from being damaged. With such a configuration, it is possible to prevent power storage device 20 from being short-circuited to cause thermal runaway. As a result, the safety of power storage module 10 can be improved when cell holder 30 is crushed by the impact applied to power storage module 10.

Side wall 50 covers the side peripheral surface of power storage device 20 as described above. Of side walls 50, side wall 50 covering the lengthwise of power storage module 10 in plan view has notch 52 as a second notch formed along the side peripheral surface of power storage device 20.

Notch 52 is formed in a region below substantially the center of side wall 50 along the axis of the power storage device 20. Notch 52 is formed between adjacent power storage devices 20 at the edge of cell holder 30. Notch 52 is formed in a substantially triangular shape having an arc along power storage device 20 in plan view.

In other words, notch 42 is formed by notching the outside of the side wall so that the thickness of side wall 50 is a predetermined thickness. The predetermined thickness may be any thickness that ensures the rigidity of cell holder 30.

According to notch 52, when an impact is applied to power storage module 10 and cell holder 30 is crushed, triangular piece 53 formed by the damage of side wall 50 can be thinned.

By thinning triangular piece 53, the rigidity of triangular piece 53 is weakened (weakened), and even when triangular piece 53 abuts on the side peripheral surface of power storage device 20, it is possible to suppress power storage device 20 from being damaged. With such a configuration, it is possible to prevent power storage device 20 from being short-circuited to cause thermal runaway. As a result, the safety of power storage module 10 can be improved when cell holder 30 is crushed by the impact applied to power storage module 10.

In addition, according to notch 52, the rigidity of the side wall can be improved as compared with the side wall having the same thickness which is entirely formed in a flat plate shape. Accordingly, the strength of power storage module 10 can be improved.

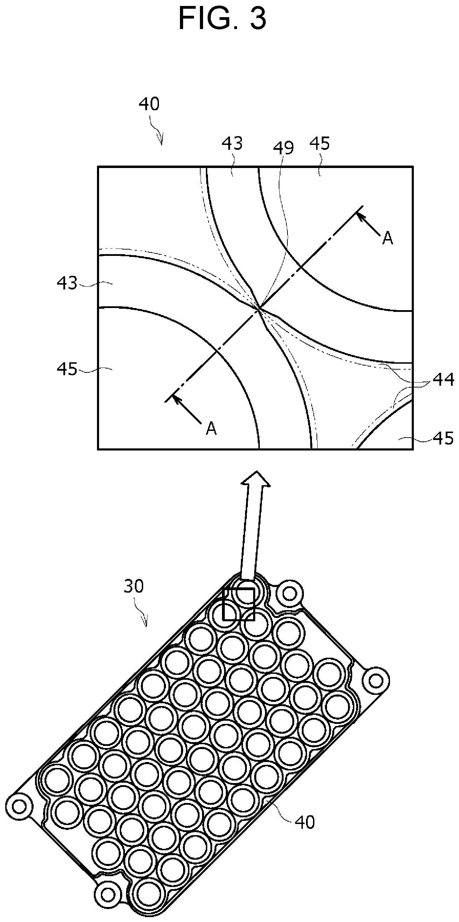

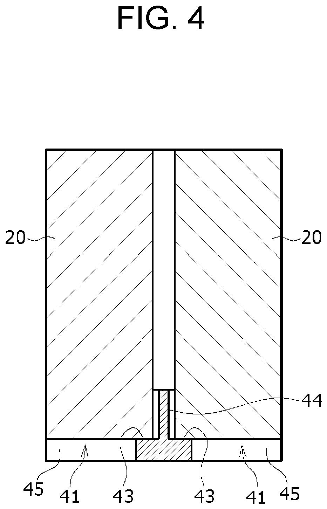

A gap between containers 41 of retainer 40 of cell holder 30 as an example of the exemplary embodiment will be described in detail with reference to Figs. 3 and 4. Fig. 3 is a plan view and a partially enlarged view illustrating retainer 40. Fig. 4 is an AA cross-sectional view of Fig. 3. In Fig. 4, power storage device 20 is illustrated.

As described above, container 41 includes bottom surface 43 facing the lower end surface (bottom surface) of power storage device 20, wall 44 having the inner peripheral surface facing the side peripheral surface of the lower end of power storage device 20, and opening 45 formed in bottom surface 43 and exposing the bottom surface of power storage device 20.

The upper end of wall 44 (opening of container 41) may be formed to be slightly inclined with respect to the axis of the power storage device 20 from the upper surface of retainer 40 toward bottom surface 43. In other words, wall 44 is formed to decrease in diameter from the upper surface of retainer 40 toward bottom surface 43. As described above, since the upper end of wall 44 is inclined, the inclined surface is not in contact with the side peripheral surface of power storage device 20. Therefore, when cell holder 30 is damaged and triangular piece 48 is generated, the inclined surface of triangular piece 48 is less likely to come into contact with power storage device 20. Therefore, power storage device 20 is hardly damaged by triangular piece 48.

A part of the inner surface of wall 44 where a distance between adjacent containers 41 of retainer 40 is minimized in plan view (hereinafter, a proximity part between containers 41) is farther away from power storage device 20 than other parts of the inner surface of wall 44. With such a configuration, in retainer 40, power storage device 20 and wall 44 are not brought into contact with each other at the proximity part between containers 41.

With the thinnest region between containers 41 having the above-described configuration, when an impact is applied to power storage module 10 and cell holder 30 is crushed, acute angle part 49 formed in the proximity part between containers 41 due to the damage of retainer 40 is separated from power storage device 20 in the radial direction of power storage device 20. It is possible to prevent acute angle part 49 from piercing the side peripheral surface of power storage device 20. With such a configuration, it is possible to prevent power storage device 20 from being short-circuited to cause thermal runaway. As a result, the safety of power storage module 10 can be improved when cell holder 30 is crushed by the impact applied to power storage module 10.

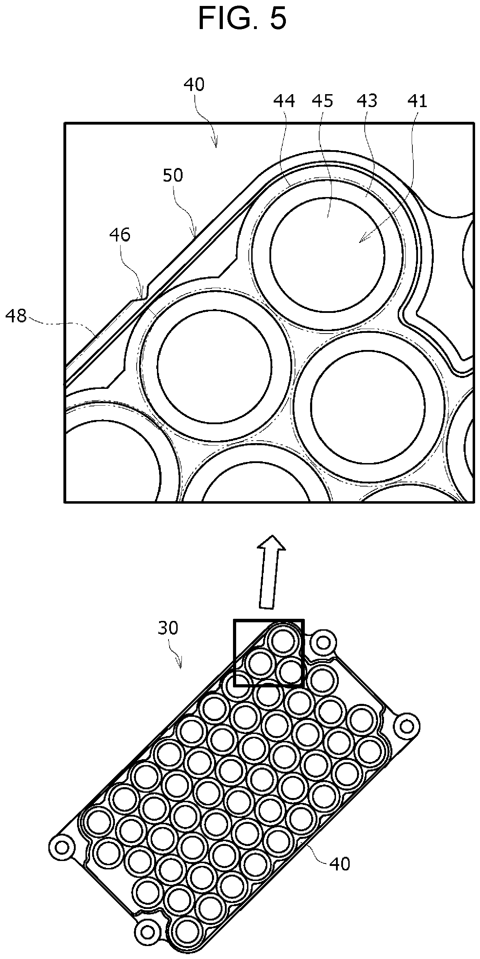

A side peripheral surface of cell holder 30 as another example of the exemplary embodiment will be described in detail with reference to Fig. 5. Fig. 5 is a plan view and a partially enlarged view illustrating cell holder 30.

Notch 46 is provided as a groove-shaped third notch extending along the axis of the power storage device 20 on the outer surface of side wall 50. For example, notch 46 may have a triangular shape (a shape in which the area of the bottom of the notch is smaller than the area of the opening) in plan view and may have a groove shape extending in the axis, or may have a plurality of dots arranged in the axis.

By forming notch 46 on the outer surface of side wall 50, a part of side wall 50 where notch 46 is formed becomes thin. Accordingly, when an impact is applied from the side surface of power storage module 10, side wall 50 is bent in a direction away from container 41 with notch 46 as a starting point. Further, when a force is applied to side wall 50, a place where notch 46 is formed in side wall 50 is broken as a fracture starting point, and due to the damage of side wall 50, triangular piece 48 formed in the vicinity of notch 46 (edge of retainer 40) when cell holder 30 is viewed in plan view is separated in a direction away from cell holder 30.

With such a configuration, it is possible to prevent triangular piece 48 from being stuck into the side peripheral surface of power storage device 20 and hence, it is possible to prevent power storage device 20 from being damaged. With such a configuration, it is possible to prevent power storage device 20 from being short-circuited to cause thermal runaway. As a result, the safety of power storage module 10 can be improved when cell holder 30 is crushed by the impact applied to power storage module 10.

Note that the present invention is not limited to the above-described exemplary embodiments and modified examples thereof, and it is a matter of course that various changes and improvements can be made within the scope of the matters described in the claims of the present application. For example, although two exemplary embodiments have been described in this example, exemplary embodiments combining these exemplary embodiments are also contemplated.

Further, notch 42 related to retainer 40 of cell holder 30, the configuration of the proximity part between containers 41, and notch 46 disclosed in this example can also be applied to the configuration of holding the upper end of power storage device 20 of lid 60. Also in this case, functions and effects similar to the functions and effects of notch 42, the configuration of the proximity part between containers 41, and the functions and effects of notch 46 as described above are obtained.

### REFERENCE MARKS IN THE DRAWINGS

- 10: power storage module
- 20: power storage device
- 30: cell holder
- 40: retainer
- 41: container
- 42: notch (first notch)
- 43: bottom surface
- 44: wall
- 44A: wall of proximity part between containers 41
- 45: opening
- 46: notch (third notch)
- 47: triangular piece
- 48: triangular piece
- 49: acute angle part
- 50: side wall
- 52: notch (second notch)
- 53: triangular piece
- 60: lid
- 110: power storage module
- 130: cell holder
- 140: retainer
- 141: container
- 147: triangular piece
- 150: side wall

## Claims

1. A power storage module comprising:
at least one power storage device in a cylindrical shape; and
a cell holder that houses the at least one power storage device,
wherein
the cell holder includes a retainer that holds a first side or a second side along an axis of the power storage device, and a side wall that covers a side peripheral surface of the power storage device, and
the retainer includes at least one container which houses a first end or a second end
of the power storage device inside of the at least one container, and a first notch that is disposed on a side surface of the retainer along an inner surface of the at least one container.

2. The power storage module according to Claim 1, wherein the side surface of the retainer is an outermost peripheral surface of the retainer.

3. The power storage module according to Claim 1, wherein
a concave part is disposed on an outer surface of the retainer in a region between adjacent containers among a plurality of containers including the at least one container or in a region surrounded by the plurality of the containers, and
a side surface of the retainer is a surface of an inner surface of the concave part along an inner surface of the at least one container.

4. The power storage module according to Claim 1, wherein
the side wall is protruded from the retainer and is separated from the at least one container in a radial direction of the power storage device, and
a part of the power storage device extends from the at least one container, and a filler is interposed between a side peripheral surface of an extended part of the power storage device and the side wall.

5. The power storage module according to Claim 1, wherein the side wall includes a second notch provided along a side peripheral surface of the power storage device.

6. The power storage module according to any one of Claims 1 to 5, wherein
the at least one container includes a wall facing a side peripheral surface on the first end or the second end of the power storage device, and
in a part where a distance to the container adjacent to the wall on a surface of the wall facing the power storage device is minimum, a distance to the power storage device is larger than a distance to the power storage device in a part other than a part where a distance to the container is minimum on a surface of the wall facing the power storage device.

7. The power storage module according to any one of Claims 1 to 6, comprising a third notch on an outer surface of the side wall.

8. The power storage module according to Claim 7, wherein the third notch is provided to include a position where a distance between the container and the side wall is minimized when the cell holder is viewed in plan view.
